# EUROPEAN PATENT SPECIFICATION

(11) **EP 0 758 947 B1**
(45) Date of publication and mention of the grant of the patent: **19.06.2002**
(21) Application number: 96910392.8
(22) Date of filing: 07.03.1996
(51) Int. Cl.: B29C 43/00, B30B 15/00, B21D 37/14

(54) **APPARATUS AND METHODS FOR FORMING WORKPIECES**
VORRICHTUNG UND VERFAHREN ZUM HERSTELLEN VON WERKSTÜCKEN
APPAREIL ET PROCEDE DE FORMATION DE PIECES A TRAITER

(30) Priority: 10.03.1995 US 401763
(43) Date of publication of application: 26.02.1997
(73) Proprietor: Atlas Technologies, Inc., Fenton, MI 48430-1797 (US)
(72) Inventor: AUSTIN, Michael, D., Flushing, MI 48433 (US)
(74) Representative: Tetzner, Michael, Dipl.-Ing.
(86) International application number: PCT/US96/03189
(87) International publication number: WO 96/28293

(56) References cited:
- US-A- 3 516 277
- US-A- 4 421 469
- US-A- 4 923 381
- US-A- 5 186 958

## Description

This invention relates to apparatus and methods for exchanging workpiece forming dies in forming presses and for transferring workpieces successively to each of a plurality of such presses.

### BACKGROUND OF THE INVENTION

The production of finished workpieces from blanks traditionally is accomplished by the use of a series of forming presses or stations arranged longitudinally in a row wherein a workpiece is fed to a forming die at one end of the row that changes the shape of the workpiece. Although a finished part can be made in one forming operation, it is more common to use three to ten successive forming operations to produce a finished part from a,blank. Each forming operation normally uses a forming die that is made to reshape or reform the workpiece that is delivered to such die. Each die normally comprises a die set having vertically adjustable upper and lower halves that move relative to one another following delivery of a workpiece between the die halves so that relative movement of the halves toward one another engages and reforms the workpiece.

Apparatus for performing successive forming operations on a workpiece may comprise a single forming press having a plurality of forming dies within the press to each of which a workpiece is moved in succession. This type of forming press is known as a transfer press and, once the workpiece has been introduced to one end of the press, it is transferred from die to die by transfer means contained wholly within the press. A transfer press conventionally produces a finished part.

Another type of apparatus for forming workpieces comprises a progressive die press wherein all the dies are contained within a single press. In this case, however, a strip of material is fed into one end of the press and the part is made by stamping the strip at successive die forming stations leaving the part attached to the strip until the last die operation at which the part is cut free from the strip. The movement of the workpiece from die to die is carried out by movement of the strip to which the workpieces are attached, thereby requiring no workpiece transfer apparatus other than the strip feeder itself. However, because of the need to keep the workpieces attached to the strip until the final die operation, there can be excessive scrap. Further, the dies need to be maintained quite close together thereby complicating the construction and exchange of the dies.

There also exists what is known as a tandem press line which comprises a plurality of individual forming presses arranged in a row with each of the presses being uniformly spaced from one another. In a tandem press line a workpiece is delivered to the press at one end of the row and shaped by operation of that press. The workpiece then is transferred from the first press across the space between the first press and the next adjacent press, following which the workpiece is transferred to the adjacent press and again shaped. This procedure is repeated for each of the presses in the row.

In all of the systems referred to, it is necessary to provide for delivery of the workpiece into the first press or die station, transfer the workpiece from the first press or die station to the next, and transfer the finished workpiece from the final press or die station to some kind of workpiece receiver.

The handling of the workpiece during its transfer to and from the presses has resulted in severe problems. It is preferable to transfer the workpiece by some kind of automatic material handling apparatus because such apparatus is faster, frequently less expensive, and less dangerous to personnel and to the workpieces themselves as compared to manual transfer.

Automatic material handling systems for presses can take various forms. Typically, special purpose overhead lift, carry, and place mechanisms are used to load and unload the presses by means of vacuum cups or grippers. Such mechanisms also may be used to transfer workpieces between the presses.

When a change in the workpieces to be formed is made it is necessary to change the die sets in the presses. This usually necessitates the provision of equipment to relocate the workpiece transfer apparatus to enable the die sets in the presses to be replaced by other die sets. The conventional transfer apparatus is supported on a floor mounted framework at one end of the row of presses, as well as between adjacent presses, although in some installations it is possible to raise, lower, or bodily move the transfer apparatus to positions in which the die sets may be moved into and out of the presses.

There are many kinds of automatically operable material handling or workpiece transfer devices for use in press line applications. For example, there are lift and carry shuttles, conveyors, robotic arm devices, and articulated arm units which function to transfer a workpiece from one position to another in timed relation to the operation of the presses.

Regardless of the type of workpiece transfer devices that have been used, all must be removed from the press line to allow die exchanges to be performed or to permit access to the die for maintenance or other operations.

Forming presses make use of die sets composed of upper and lower halves for the manufacture of each part or, more precisely, for each operation needed to make the finished part. The presses in the press lines are capable of operating on more than one specific part thereby necessitating exchanging of a die set designed for forming one part with another die set for forming a different part, and vice versa. To enable the exchange to be made efficiently, the workpiece transfer apparatus must be relocated or adjusted to avoid interference between the transfer apparatus and the die sets and the apparatusby means of which the exchange is effected.

In modern press installations a single press can run hundreds of parts without any change of the dies, but it is more common to run between five to twenty parts per press for most production processes. Since the dies can be quite large and heavy, e.g., 1 to 75 tons, exchanging one set of dies for another heretofore has been a difficult process that can require as much as an entire production shift to perform. If a production run is limited to a small number of parts, a large number of die changes are necessary. If six to eight hours are required for each exchange, production time is limited severely.

Die changing equipment has been developed and is in use which enables the exchanging of dies to be performed relatively quickly. Part of this equipment comprises a movable die cart having wheels which ride on floor tracks between positions in which a die set can be moved from the cart into a press from one side thereof while the die set previously in the press simultaneously is moved out of the press onto another cart that is positioned on the opposite side of the press.

Die carts enable the elimination of a great deal of time required to effect press changeover. In a tandem press line, for example, the carts move into position at each end of the press line as well as between adjacent presses and effect exchange of the dies. Many different die exchange arrangements can be used effectively, with anywhere from one to four or more presses being serviced by each die cart. The die carts, when not in use in exchanging dies, normally are parked in an area remote from the presses so as to provide room for personnel and the workpiece transfer apparatus during operation of the press. For example, a so-called "domino" process can change the dies in a tandem press line, or a transfer/progressive/blanking press in three simple steps. This process uses one more die cart than the number of presses and the three steps are: (1) preload all of the die carts except one with a "new" die set and move the carts into the press line, the empty die cart being located at one end of the press line; (2) drive the "old" die sets from the associated presses in a direction toward the empty die cart simultaneously, thereby enabling the "old" die sets to move from the presses onto the die carts as the "new" die set is being inserted into the adjacent press; and (3) move the die carts now carrying the "old" die sets out of the line of presses. In this operation the die cart initially having no die set will bear one of the "old" die sets, whereas the die cart at the opposite end of the line will not carry a die set.

Die carts which function in the described manner have been manufactured heretofore by Atlas Technologies, Inc., of Fenton, Michigan, and are in use worldwide.

Following removal of the die carts and the "old" die sets from the line of presses, material handling apparatus for transferring the workpieces into and out of the presses is positioned in the spaces between adjacent presses, and the die carts are parked in an area remote from the presses.

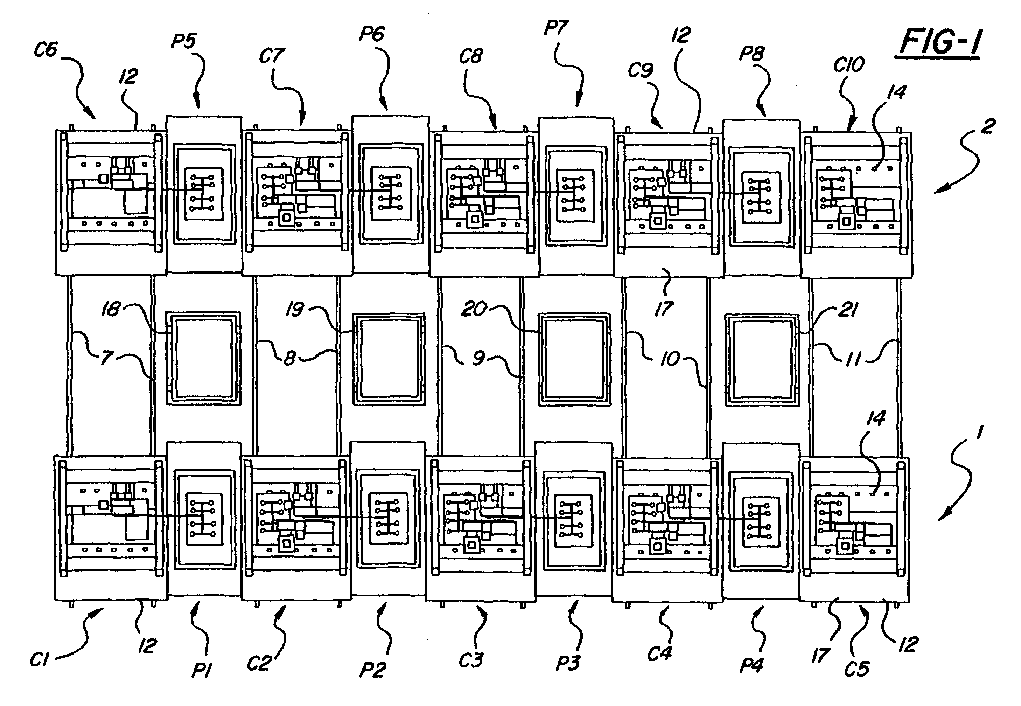

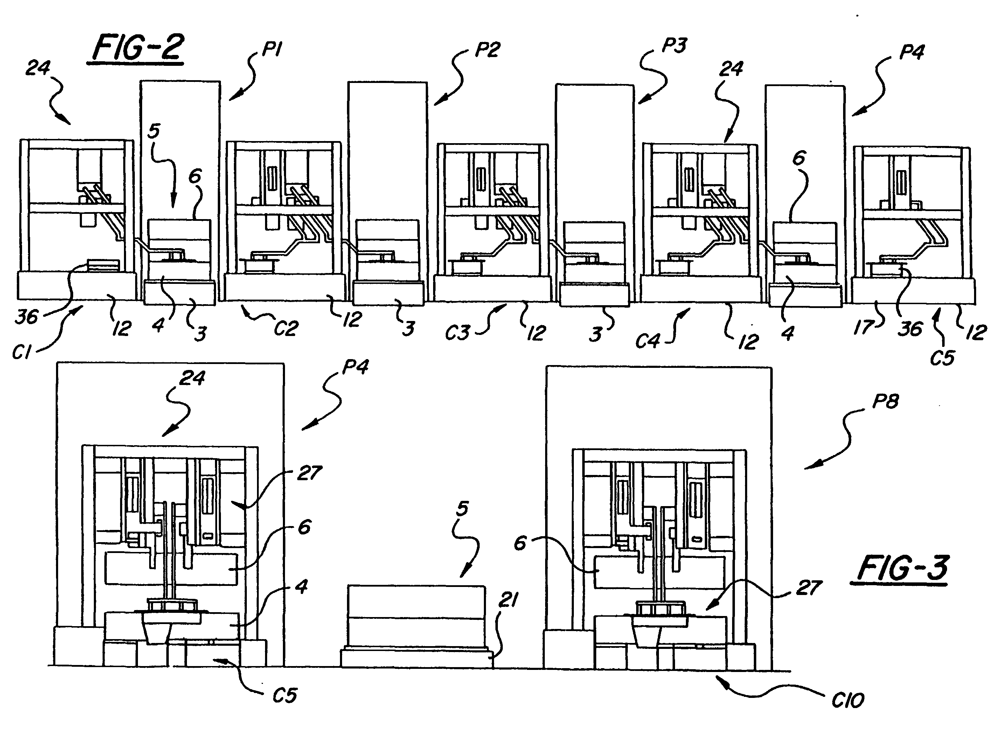

From US-A-35 16 277 there is known a workpiece feed and die change device for the removal and replacement of dies in presses for sheet metal, for example. In this case, two carriages or carts (arranged in pairs) are associated with each press. One cart of each pair is a die cart, which is capable of supporting a die, and which includes means for transferring the die into and out of an adjacent press. The second cart of each pair is a workpiece transfer cart and supports a conveyor for transporting stamped or pressed workpieces from one press to another. When the first or die cart is in a first position (cf. Fig.2) in which it can effect transfer of a die from the cart to the press, the second or workpiece transfer cart is in a position in which the conveyor is not aligned with the presses (this position of the second cart is also shown in Fig.2). When the die cart and the workpiece transfer cart are moved to positions in which the transfer cart is able to transfer pressed workpieces from one press to another, and the die is in the press, the die cart no longer is in its aforementioned first position. Instead, the die cart is in another, different position (shown in Fig.1) and in which it no longer is aligned with the presses.

Although the use of a movable die cart to facilitate die exchanges has many benefits, available floor space in many existing facilities imposes severe limitations on the use of movable die carts. In many large press facilities, the physical plant was designed and constructed many years ago, such designs were dictated by economics and then available materials. In many instances a series of parallel tandem press lines was used including two press lines per bay and having an overhead crane for moving die sets. In some cases the crane tracks spanned the width of the bay so as to be perpendicular to the press rows, whereas in other instances the crane tracks and press rows paralleled one another. Conventionally, the two parallel press lines have adequate spacing between them to form an aisle for movement of the die sets to and from the presses as well as accommodating the need for access space for press maintenance. Conventionally a smaller aisle on each of the outer edges of the building's bay are provided, but such aisles usually are quite narrow because of the foundation requirements for the presses, crane track supporting columns, and the like.

In most cases the older press facilities provide no allowance for either die carts or movable material handling apparatus because they relied upon manual handling of the parts between the presses and therefore had no need to provide floor space for automatic material handling apparatus at the ends of the rows and between adjacent presses. Neither was any allowance made for parking any type of movable die or other cart remote from the presses when the presses were in operation. Consequently, the benefits available from the use of movable die carts for rapid die exchange were difficult to achieve in some of the older facilities.

One partial solution to the problem involved the use of what is known as "sister" press lines wherein two nearly identical, parallel rows of presses could be serviced by one line of carts located in the central aisle between them. This solution necessitated that the two rows of presses be nearly identical and also restricted the scheduling flexibility since the die sets in the two rows could not be exchanged at the same time. Further, die prestaging for each line could require several hours' delay from one row to another while waiting on cranes to unload "old" dies from one row of presses to make room for prestaging the "new" dies for the other row. In addition, the die carts had to park in the center aisles because the outer aisle, i.e., those next to the walls of the building, were not accessible by the cranes because the crane tracks were not long enough.

As a result of the inability of the older facilities to accommodate the die cart die exchange system, it has been necessary to park the die cart in positions between parallel rows of presses and to move and park any workpiece transfer apparatus associated with the presses in the aisles alongside the building walls, thereby losing the use of the aisles for traffic and maintenance access. In addition, the space between adjacent rows of presses conventionally is incapable of accommodating more than one die cart, thereby necessitating utilization of the "sister" concept or limiting the ability of the die carts to serve as only one of the two lines.

A principal object of the invention is to overcome the problems referred to above.

In accordance with the present invention, this object is solved, on the one hand, by the characterizing part of claim 1 (apparatus), and on the other hand by the characterizing part of claim 12 (method).

### SUMMARY OF THE INVENTION

Apparatus and methods according to the invention enable the disadvantages referred to above to be overcome by the provision of die carts which may be moved into positions at the opposite ends of a row of presses and between adjacent presses to enable die exchanges to be effected and, at the same time, provide support for the material handling or workpiece transfer apparatus by means of which workpieces may be transferred into a press at one end of the row and from press to press to the opposite end of the row, as well as from the last press at such opposite end of the row. By enabling each die cart to accommodate not only the die sets, but also the workpiece transfer apparatus, each cart may remain in the row of presses during operation of the presses, thereby avoiding the necessity of parking the die carts or the workpiece transfer apparatus in the aisles. This arrangement makes it possible to locate die racks between the rows of presses in positions to and from which the die carts may be moved to load and unload die sets during die exchange operations. Die sets may be transferred to and from the die racks by overhead cranes or any other suitable means.

In essence, a movable cart according to the invention is capable of supporting not only the die sets and effecting die exchanges, but also the workpiece transfer apparatus, thereby enabling the carts to be parked in the press line during operation of the presses, rather than in the aisle or between the rows of presses.

A particularly significant characteristic of apparatus and methods according to the invention is the more efficient utilization of the available floor space in press room facilities and the elimination of the previously burdensome restrictions.

### THE DRAWINGS

Apparatus constructed in accordance with the presently preferred embodiment of the invention is illustrated in the accompanying drawings, wherein:
Figure 1 is a diagrammatic top plan view of two rows of die presses with stationary die racks positioned between the rows;
Figure 2 is a diagrammatic side elevational view of the row of presses shown at the bottom of Figure 1;
Figure 3 is a diagrammatic end elevational view of the apparatus shown in Figure 1;
Figure 4 is a view similar to Figure 1, but illustrating the die carts shown in the bottom row of Figure 1 moved to a position adjacent the stationary die racks;
Figure 5 is a diagrammatic side elevational view of the apparatus shown in Figure 4;
Figure 6 is a diagrammatic end elevational view of the apparatus shown in Figure 4; and
Figure 7 is an enlarged, diagrammatic, isometric view of one of the die carts and its associated equipment.

### THE PREFERRED EMBODIMENT

Apparatus constructed in accordance with the presently preferred embodiment of the invention is adapted for use in conjunction with conventional die presses arranged in parallel, longitudinally extending rows 1 and 2. The presses of row 1 are indicated at P1, P2, P3, and P4 and the presses of row 2 are indicated by the reference characters P5, P6, P7, and P8. Each press comprises a bed 3 on which the lower half 4 of a die set 5 removably may be fixed, the upper die half 6 being removably fixed to a vertically reciprocable ram (not shown) as is conventional. Each illustrated press P1-P8 is identical for convenience of illustration, but it should be understood that the presses in rows 1 and 2 need not necessarily be the same, or of the same size, or adapted to accommodate the same workpieces.

Extending between the two rows 1 and 2 of presses are five sets of parallel tracks, 7,7; 8,8; 9,9; 10,10; and 11,11. Movably supported on each pair of tracks are two wheeled die carts. Five die carts C1-C5 are associated with row 1, and five die carts C6-C10 are associated with the row 2. In the illustrated embodiment, each die cart is the same, although it should be understood that, if the presses of rows 1 and 2 operate on different workpieces, the associated die carts also may be modified to accommodate the respective workpieces.

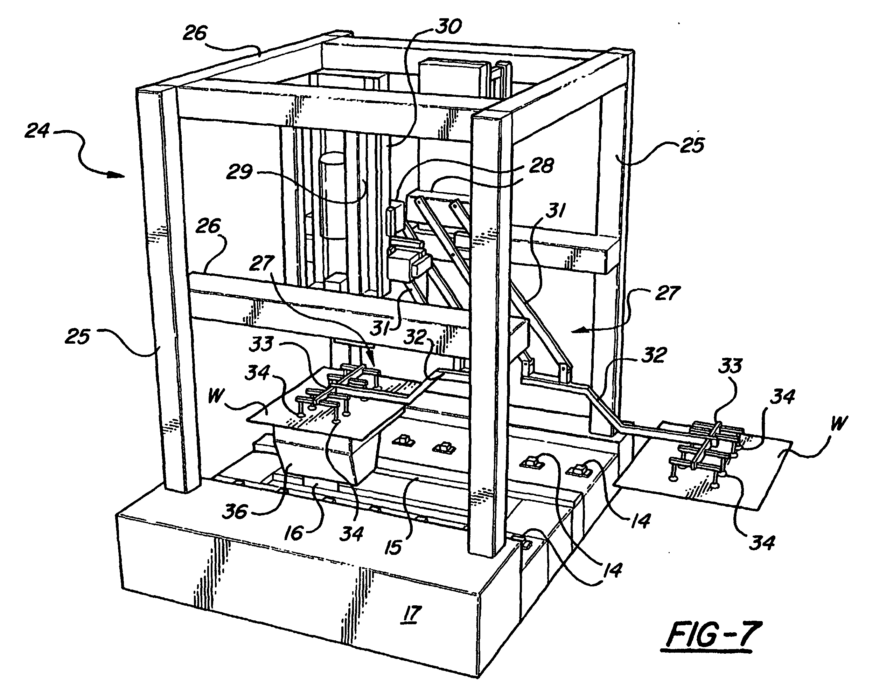

Each die cart comprises a body 12 mounted on wheels (not shown) which ride upon the respective pairs of tracks 7-11. Each die cart also has an upper surface through which a plurality of sets of rollers 14 protrude. Each cart also includes in its upper surface a channel 15 which parallels the rows 1 and 2 and within which is a mounted a reciprocable driver 16 (see Fig. 7). Each cart is provided with a housing 17 within which is mounted the operating mechanisms and controls for driving the wheels and the drivers.

As thus far described, the die carts C1-C10 are conventional and correspond to those that are and have been manufactured by Atlas Technologies, Inc.

In the aisle between the rows 1 and 2 of presses and in alignment with the opposed pairs of presses P1-P5, P2-P6, P3-P7, and P4-P8 are mounted preferably stationary, die racks 18, 19, 20, and 21, there being one die rack for each opposing pair of presses. Each die rack is conventional and has an upper surface on which a die set 5 may be supported for prestaging. Each die set may be delivered to its associated die rack by an overhead crane or other suitable means (not shown) as is conventional.

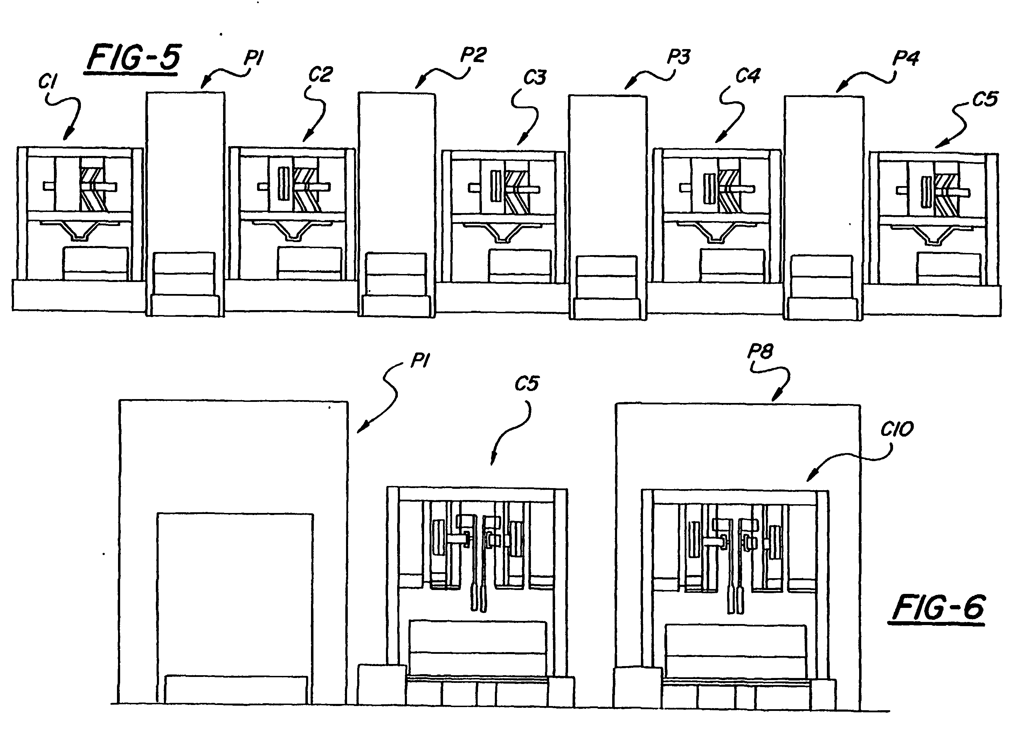

Each of the die carts constructed in accordance with the invention is modified from the conventional construction by the inclusion of a superstructure 24 comprising vertical and horizontal frame members 25 and 26, respectively. The superstructure 24 provides support for workpiece transfer apparatus designated generally by the reference character 27 and which may comprise any one of a number of conventional devices. As shown in Figures 1-7, the transfer apparatus 27 corresponds to a mechanism manufactured and sold by I. S. I. Robotics Corporation, Fraser, Michigan, under the trademark PATHFINDER. Each transfer apparatus 27 comprises at least one carriage 28 which is reciprocable horizontally in a direction parallel to the associated row 1 and 2 of presses and a second carriage 29 carried by the first carriage 28 and mounted in a slide 30 for vertical reciprocation. To the vertically reciprocable carriage 29 is pivoted one end of a linkage 31 at the opposite end of which is supported an arm 32 at the free end of which is mounted a workpiece support 33 having vacuum cups 34 or other suitable workpiece engaging and supporting means.

As is best illustrated in Figures 1 and 2, each row of presses 1 includes four presses and five die carts. There is one die cart at each end of each row and one die cart between each adjacent pair of presses. The die carts at the ends of the rows of presses are required to move workpieces only from the die cart at one end of the press row into the adjacent press or to move workpieces from the press at the opposite end of the row to the die cart at that end. However, the die carts between adjacent presses must be capable of moving workpieces from one press to the die cart between two presses and from such die cart to the next adjacent press. Accordingly, the die carts at opposite ends of the rows of presses need have only one transfer apparatus 27, whereas the die carts which occupy positions between adjacent presses have two. Figure 7 shows two of the transfer apparatuses.

The die carts C1-C10 also are modified from the conventional die cart to include a removable riser or workpiece W supporting nest 36 for supporting a workpiece on the die cart. As is shown in Figure 2, each riser 36 has its upper surface at a level corresponding to that of the upper surface of the lower die half 4 in the adjacent press. As also is shown in Figure 2, the riser 36 at the left hand cart C1 is at the right hand side of the cart, whereas the risers 36 of all other die carts shown in Figure 2 are at the left hand end of such carts. Movement of the riser between left hand and right hand sides of each cart and in the associated groove 15 is effected by the reciprocable driver 16 within the groove 15 and coupled to a reciprocable drive (not shown) within the housing 17.

In the operation of the apparatus thus far described, each press will have an open die set 5 therein and each die cart will have a riser 36 thereon. Workpieces to be formed in the presses will be placed in a stack at the left hand end of each row 1 and 2, as is conventional, and individual sheets will be lifted from the stack and placed on the riser 36 at the left hand end of each row of presses by conventional destacking equipment such as that manufactured by Atlas Technologies, Inc. The workpiece W in Figure 2 will be transferred from the riser 36 of the die cart C1 at the left hand end of the row 1 and transferred between the lower and upper die halves 4 and 6 of the die set 5 of the first press P1. The transfer apparatus 27 will release the workpiece W so that it is supported by the lower die half 4 and the transfer apparatus will be withdrawn from between the die halves.

Following placing of the workpiece on the lower die half and withdrawal of the transfer apparatus from between the halves of the die set 5, the upper die half 6 will be moved downwardly so as to form the workpiece between the halves of the die set. Thereafter, the upper die half will be moved upwardly and the transfer apparatus of the next adjacent die cart C2 operated to remove the formed workpiece from the press P1 and transfer it to the riser 36 of the cart C2, following which the riser is moved to the right from the position shown in Figure 2. The workpiece transfer apparatus associated with the cart C2 then transfers the workpiece from the cart C2 to the press P2 and deposits it between the open upper and lower die halves. This process is repeated to transfer the workpiece successively from the press P2 to the cart C3, to the press P3 to the cart C4, and to the press P4. The transfer apparatus associated with the cart C5 transfers the fully formed workpiece from the press P4 to the riser of the cart C5, such riser is moved to the right from the position shown in Figure 2, and the fully formed workpiece then is removed from the cart C5 by conventional means (not shown).

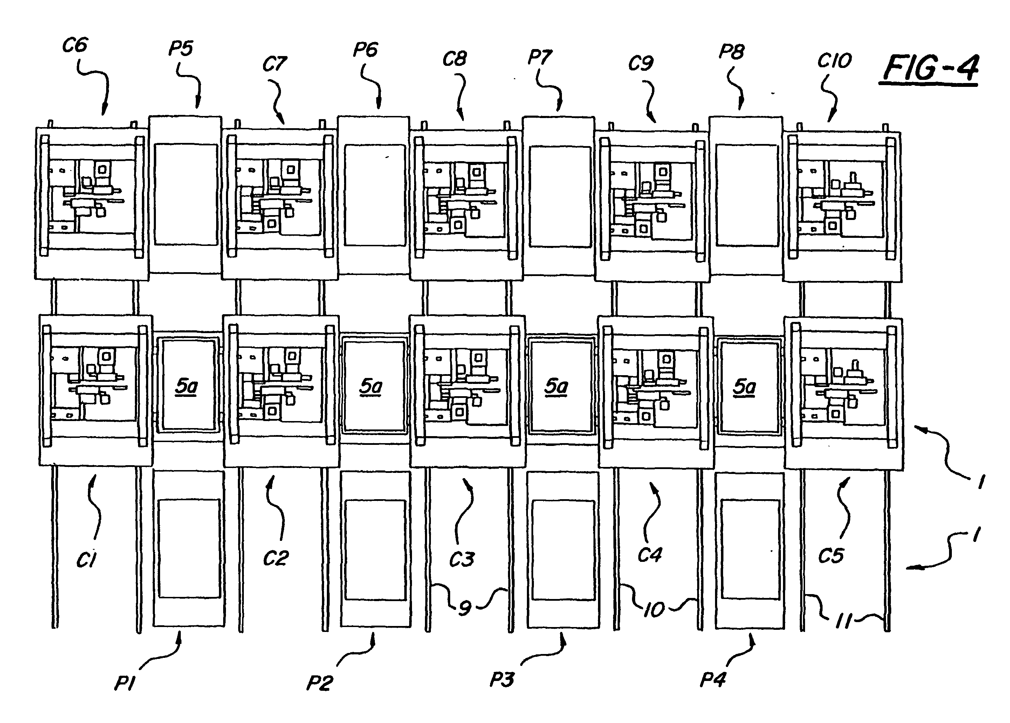

Following the end of a production run of workpieces that are to be formed in the row 1 of presses, the risers 36 are removed from the carts and the transfer mechanisms 27 are adjusted to positions in which they are withdrawn from the presses and elevated to a position above the level of the closed die sets 5. The carts of the row 1, still carrying the elevated transfer mechanisms, then are moved to positions alongside the die racks 18-21, as is shown in Figure 4.

The die racks contain "new" die sets 5a which are driven to the left onto the carts C1-C4, respectively. The cart C5 at this time does not contain either of the die sets 5 or 5a. The carts C1-C5 then are returned to the row 1 and to the positions shown in Figure 1.

The die set 5 then may be transferred from the press P4 to the empty cart C5, thereby enabling the die set 5a to be moved from the cart C4 to the press P4. This movement of the die set 5 from the press P3 enables the die set 5a on the cart C3 to be moved into the press P3. In the same manner the die sets 5 are transferred from their presses P1 and P2 to the die carts C2 and C3, thereby enabling the die sets 5a to be moved from the cart C1 and C2 to the presses P1 and P2, respectively. The cart C1 at this stage will not contain any die at all.

Once the die sets 5 have been transferred from their respective presses to the carts C2-C5, such carts may be returned to the positions shown in Figure 4 alongside the die racks, thereby enabling the die sets 5 to be transferred from the die carts to the associated die racks. The die sets 5 then may remain on the die racks or removed from the die racks so as to enable other dies to be moved thereto.

Following movement of the die sets 5 off the respective die carts C2-C5, the transfer mechanisms 27 of each die cart may be reconditioned for operation and the risers 36 restored to the respective carts so as thereby to condition the presses in row 1 for operation to form additional workpieces.

The die sets in the presses of row 2 may be exchanged for other die sets in exactly the same manner as that described in connection with the exchange of dies in the presses of row 1. In this case, however, the carts C6-C10 are moved from the positions shown in Figure 1 to positions alongside the die racks 21, and return.

The provision of one die cart more than the number of presses makes possible the exchange of die sets in a rapid, efficient manner.

In Figures 1 and 4 are shown H-shaped vertical supports for the roof and walls of the bay in which the presses are located. These figures also show that the side aisles between the supports and the presses are much narrower than the center aisle between the rows of presses. The narrowness of the side aisles is of little or no consequence, however, since, in the use of the invention, neither the die carts nor the workpiece transfer mechanisms are required to enter the side aisles.

The disclosed embodiment is representative of presently preferred forms of the invention, but is intended to be illustrative rather than definitive thereof. The invention is defined in the claims.

## Claims

1. Apparatus for supporting and moving a forming die (5) into and out of a forming press (P1-P8) in which a workpiece (W) may be formed and for transferring a formed workpiece from said press, said apparatus including:
a cart (C1-C10) movable from a frist position in alignment with and adjacent one side of a forming press to a second position out of alignment with said one side of said press,
means (15) on said cart for accommodating a forming die (5) for movement with and relative to said cart (C1-C10);
means (14) for enabling said die selectively to be moved from said cart (C1-C10) into said press (P1-P8) when said cart is in said first position;
workpiece support means (36) for removeably supporting a workpiece (W); and
workpiece transfer means (27) for transferring a workpiece (W) selectively from and to said support means (36);
**characterized by** means (24) mounting said transfer means (27) on said cart (C1-C10) for enabling said transfer means to transfer a workpiece (W) selectively from and to said support means (36) when said cart is in said first position and said die (5) is in said press.

2. Apparatus according to claim 1 **characterized in that** said transfer means (27) comprises a superstructure (24) projecting upward from said cart (C1-C10) and wherein said transfer means is carried by said superstructure.

3. Apparatus according to claim 2 **characterized in that** including means (29) for adjusting said transfer means (27) vertically relative to said superstructure (24) to provide sufficient clearance between said transfer means and said cart (C1-C10) to enable said forming die (5) to be moved to and from said cart without interference from said transfer means.

4. Apparatus according to claim 1, for use in conjunction with at least one forming press (P1-P8) within which is a forming station having a die set (5) composed of separable die halves (4,6) between which a workpiece (W) may be accommodated and formed, **characterized by** a pair of movable carts (C1,C2, for ex.) one of which is movable to a position in which said die set (5) may be moved from said cart into said forming station and the other of which is movable to a position to receive said die set from said forming station; first transfer means (27) carried by said one (C1, for ex.) of said carts for transferring a workpiece (W) from said one of said carts into said forming station and between the halves (4,6) of said die set (5); and second transfer means (27) carried by said other (C2, for ex.) of said carts for transferring a workpiece (W) from between the halves of said die set to said other of said carts.

5. Apparatus according to claim 4, **characterized in that** each of said carts (C1,C2) is capable of supporting said die set (5) and including means (14) for moving said die set from and to said carts to and from said forming station.

6. Apparatus according to claim 5, **characterized in that** each of said first and second transfer means (27) is adjustable relative to the associated cart (C1,C2) to enable such cart to support said die set (5) and the associated transfer means simultaneously.

7. Apparatus according to claim 6, **characterized by** including a rack (18, for ex.) adjacent said press (P1, for ex.) for supporting said die set (5,5a), at least one of said carts (C1,C2, for ex.) being movable to and from a position adjacent said rack to enable a die set to be moved to and from said rack from and to said cart.

8. Apparatus according to at least one of claims 4 to 7, **characterized by** a pair of substantially parallel, spaced apart rows (1,2) of workpiece forming presses (P1-P4, P5-P8), each of the presses in each of said rows being spaced from one another and adapted to accommodate a die set (5) having die halves (4,6) between which a workpiece (W) may be positioned and removed, a plurality of racks (18,19,20,21) corresponding to the number and spacing of said presses, each of said racks being adapted for the removable accommodation of one of said die sets (5,5a). means (7,8,9,10,11) for moving each of said carts (C1-C10) from a first position adjacent one of said racks to a second position adjacent one of said presses and in which a die set (5) supported on such cart may be moved into such press, and return, and means for moving a die set (5) supported by said cart from the latter into the adjacent press when said cart is in said second position; and including workpiece transfer means (27) carried by each of said carts (C1-C10) for transferring workpieces (W) from said carts to the adjacent press and from such press to the next adjacent press.

9. Apparatus according to claim 8, **characterized in that** the transfer means (27) of each of said carts (C1-C10) is movable to a position in which the movement of a die set (5) to or from such cart does not interfere with said transfer means.

10. Apparatus according to claim 8, **characterized by** including means (10) carried by each of said carts for moving a die set (5) to and from each cart.

11. Apparatus according to claim 8, **characterized in that** each of said die sets (5) comprises an upper half (6) and a lower half (4), each lower half having a workpiece support surface occupying a level within its associated press which is above that of the adjacent cart upper surface, and workpiece support means (36) carried by each of said carts wherein the associated die set (5) is within said press, each of said workpiece support means having a workpiece support surface at a level corresponding to that of the adjacent lower die half (4).

12. A method for forming workpieces wherein each workpiece (W) is presented successively to forming presses (P1-P5; P6-P8) arranged in a longitudinally extending row (1;2) and which are spaced from one another longitudinally of said row, wherein one of a number of die carts (C1;C6) each carrying a die set (5) is positioned in a first position in which the die set carried thereby is adjacent the press (P1;P5) at one end of said row (1;2), and other (C2-C4; C7-C9) of said die carts carrying other die sets (5) are positioned in a corresponding first position adjacent the remaining presses (P2-P4; P6-P8) of said row, and the die sets (5) carried by said die carts (C1-C10) are moved into the adjacent press while said die carts are in said first positions whereby each of said presses contains one of said die sets (5), **characterized by** moving a workpiece (W) onto said one die cart (C1;C6) at said one end of said row (1;2) of presses (P1-P4;P5-P8), and moving said workpiece (W) successively from said one die cart to each of the presses (P1-P4; P5-P8) and to each of the remaining die carts while each of said die carts remains in its said first position.

13. The method according to claim 12, **characterized in that** the movement of said workpiece (W) from one end of said row (1;2) to the opposite end thereof is effected by workpiece transfer mean (27) carried by said carts.

14. The method according to claim 13, **characterized by** moving said transfer means (27) of each of said carts (C1-C10) vertically to a position in which the die set (5) associated with such cart is movable from and to such cart without interfering with such transfer means.

15. A method according to claim 12, **characterized by** positioning the plurality of forming presses (P1-P4;P5-P8) in said longitudinally extending row (1;2) and providing a corresponding plurality plus one said carts (C1-C10) on each of which a workpiece forming die set (5) may be supported; moving all of said carts into positions relative to said presses and in which one of said carts is at each end of said row and the remaining carts occupy the spaces between adjacent presses; moving into an adjacent press the die set (5) carried by each cart on which a die set is carried; positioning a workpiece (W) on the cart at one end of said row (1;2) of presses; transferring such workpiece (W) from the cart at said one end of said row to the press at said one end of said row; forming the workpiece (W) in said press at said one end of said row; transferring the formed workpiece to the cart in the space between the press at said one end of said row and the next adjacent press; transferring the formed workpiece from the cart between the press at said one end of said row to said next adjacent press; additionally forming the formed workpiece in said next adjacent press; and transferring the additionally formed workpiece from the next adjacent press to the cart upstream from the next adjacent press.

16. The method according to claim 15, **characterized by** removing the reformed workpiece (W) from the said upstream cart.

17. The method according to claim 15, **characterized by** returning the die sets (5) from the presses (P1-P8) to the respective carts following completion of the forming and reforming operations on the workpieces (W).

## Patentansprüche

1. Vorrichtung zur Halterung einer Gesenkform (5) und zu deren Transport in eine Formpresse (P1 - P8), in der ein Werkstück (W) geformt werden kann, sowie aus dieser Formpresse heraus und zum Umladen eines aus der Presse kommenden geformten Werkstücks, wobei die Einrichtung die folgenden Bestandteile umfaßt:
- einen Wagen (C1 - C10), der von einer ersten Position, in der er mit einer Seite einer Formpresse fluchtet und an ihr anliegt, in eine zweite Position bewegt werden kann, in der er nicht mehr mit der einen Seite der Formpresse fluchtet,
- an diesem Wagen vorgesehene Mittel (15), die eine Gesenkform (5) so aufnehmen, daß diese sich zusammen mit dem Wagen (C1 - C10) und relativ zum Wagen bewegen läßt;
- Mittel (14) zur Ermöglichung eines selektiven Transports des Gesenks vom Wagen (C1 - C10) in die Presse (P1 - P8), wenn sich der Wagen in der ersten Position befindet;
- Werkstück-Halterungsmittel (36) zur lösbaren Halterung des Werkstücks (W); und
- Werkstück-Umlademittel (27) zum wahlweisen Umladen des Werkstücks (W) von den Halterungsmitteln (36) weg und zu ihnen hin;
**gekennzeichnet durch** Mittel (24), die die Umlademittel (27) am Wagen (C1 - C10) so haltern, daß die Umlademittel ein Werkstück (W) wahlweise von den Halterungsmitteln (36) weg und zu ihnen hin umladen können, wenn der Wagen sich in der ersten Position befindet und das Gesenk (5) in der Presse angeordnet ist.

2. Vorrichtung nach Anspruch 1, **dadurch gekennzeichnet, daß** die Umlademittel (27) einen vom Wagen (C1 - C10) nach oben vorstehenden Aufbau (24) umfassen und die Umlademittel von diesem Aufbau getragen werden.

3. Vorrichtung nach Anspruch 2, **gekennzeichnet durch** Mittel (29) zur vertikalen Einstellung der Umlademittel (27) relativ zum Aufbau (24), wodurch ein ausreichender Abstand zwischen den Umlademitteln und dem Wagen (C1 - C10) erzielt und so ein Transport der Gesenkform (5) zum Wagen hin und von diesem weg ohne Beeinträchtigung **durch** die Umlademittel ermöglicht wird.

4. Vorrichtung nach Anspruch 1 zur Verwendung in Verbindung mit wenigstens einer Formpresse (P1 - P8), in der eine Formstation mit einer Gesenkgarnitur (5) vorgesehen ist, welche aus voneinander trennbaren Gesenkhälften (4, 6) besteht, zwischen denen ein Werkstück (W) angeordnet und geformt werden kann, wobei die Vorrichtung **dadurch gekennzeichnet ist, daß** sie die folgenden Bestandteile enthält: ein Paar bewegliche Wagen (z.B. C1, C2), von denen einer sich an eine Position bewegen läßt, in der die Gesenkgarnitur (5) von diesem Wagen weg in die Formstation hineintransportiert wird, und von denen der andere sich an eine Position bewegen läßt, in der er die von der Formstation kommende Gesenkgarnitur aufnimmt; erste Umlademittel (27), die von dem ersten (z.B. C1) der Wagen getragen werden und zum Umladen eines Werkstücks (W) von diesem ersten Wagen in die Formstation und zwischen die Hälften (4, 6) des Gesenkgarnitur (5) hinein dienen; sowie zweite Umlademittel (27), die von dem anderen (z.B. C2) der Wagen getragen werden und zum Umladen eines Werkstücks (W) zwischen den Hälften der Gesenkgarnitur heraus und zu diesem anderen Wagen hin dienen.

5. Vorrichtung nach Anspruch 4, **dadurch gekennzeichnet, daß** jeder der Wagen (C1, C2) in der Lage ist, eine der Gesenkgarnituren (5) aufzunehmen, und daß die Vorrichtung Mittel (14) zum Transport der Gesenkgarnitur von den Wagen zur Formstation und umgekehrt umfaßt.

6. Vorrichtung nach Anspruch 5, **dadurch gekennzeichnet, daß** sich jedes der ersten und zweiten Umlademittel (27) relativ zum zugehörigen Wagen (C1, C2) so einstellen läßt, daß der Wagen die Gesenkgarnitur (5) und die zugehörigen Umlademittel gleichzeitig tragen kann.

7. Vorrichtung nach Anspruch 6, **dadurch gekennzeichnet, daß** die Vorrichtung ein der Presse (z.B. P1) benachbartes Gerüst (z.B. 18) zur Halterung der Gesenkgarnitur (5, 5a) enthält, wobei wenigstens einer der Wagen (z.B. C1, C2) sich zu einer dem Gerüst benachbarten Position hin- und von dieser Position wieder wegbewegen läßt, um einen Transport der Gesenkgarnitur vom Wagen zum Gerüst und umgekehrt zu ermöglichen.

8. Vorrichtung nach wenigstens einem der Ansprüche 4 bis 7, **gekennzeichnet durch** die folgenden Bestandteile: ein Paar im wesentlichen paralleler, zueinander beabstandeter Reihen (1, 2) von Werkstück-Formpressen (P1 - P4, P5 - P8), wobei die einzelnen Pressen in jeder der Reihen zueinander beabstandet und so ausgelegt sind, daß sie jeweils eine Gesenkgarnitur (5) aufnehmen können, welche aus Gesenkhälften (4, 6) besteht, zwischen denen sich ein Werkstück (W) positionieren und wieder entfernen läßt, mehrere Gerüste (18, 19, 20, 21), die in Anzahl und Abstand den Pressen entsprechen und jeweils so ausgelegt sind, daß sie jeweils eine der Gesenkgarnituren (5, 5a) lösbar haltern können, Mittel (7, 8, 9, 10, 11), die jeden der Wagen (C1 - C10) aus einer ersten, einem der Gerüste benachbarten Position an eine zweite, einer der Pressen benachbarten Position, in der sich ein auf dem Wagen befindliche Gesenkgarnitur (5) in eine der Pressen hineintransportieren läßt, und wieder zurück bewegen, und Mittel, die eine vom Wagen getragene Gesenkgarnitur (5) von diesem Wagen weg in die hierzu benachbarte Presse transportieren, wenn der Wagen sich in seiner zweiten Position befindet; und wobei die Vorrichtung Werkstück-Umlademittel (27) umfaßt, die jeweils auf einem der Wagen (C1 - C10) angeordnet sind und zum Umladen der Werkstücke (W) vom Wagen auf die benachbarte Presse bzw. von einer solchen Presse zur nächsten, benachbarten Presse dienen.

9. Vorrichtung nach Anspruch 8, **dadurch gekennzeichnet, daß** sich die Umlademittel (27) jedes Wagens (C1 - C10) an eine Position bewegen lassen, an der der Transport einer Gesenkgarnitur (5) vom bzw. zum Wagen durch die Umlademittel nicht beeinträchtigt wird.

10. Vorrichtung nach Anspruch 8, **dadurch gekennzeichnet, daß** die Vorrichtung auf jedem der Wagen Mittel (10) aufweist, die zum Transport einer Gesenkgarnitur (5) zu jedem der Wagen hin bzw. von diesem weg dienen.

11. Vorrichtung nach Anspruch 8, **dadurch gekennzeichnet, daß** jede Gesenkgarnitur (5) eine obere Hälfte (6) und eine untere Hälfte (4) umfaßt, wobei jede untere Hälfte eine Werkstück-Aufnahmefläche aufweist, die innerhalb der zugehörigen Presse höher liegt als die Oberseite des hierzu benachbarten Wagens, und dadurch, daß auf jedem der Wagen Werkstück-Halterungsmittel (36) vorgesehen sind, wobei eine Werkstück-Halterungsfläche jedes Werkstück-Halterungsmittels auf derselben Höhe liegt wie die benachbarte untere Gesenkhälfte, wenn die zugehörige Gesenkgarnitur (5) sich innerhalb der Presse befindet.

12. Verfahren zur Formung von Werkstücken, wobei jedes Werkstück (W) sukzessive zu Formpressen (P1 - P5; P6 - P8) transportiert wird, die in einer sich in Längsrichtung erstreckenden Reihe (1; 2) angeordnet und zueinander in Längsrichtung der Reihe beabstandet sind, wobei einer von mehreren, jeweils eine Gesenkgarnitur (5) tragenden Gesenkwagen (C1; C6) an einer ersten Position angeordnet wird, an der die auf dem Wagen befindliche Gesenkgarnitur neben der an einem Ende der Reihe (1; 2) befindlichen Presse (P1; P5) angeordnet ist; und wobei die anderen Gesenkwagen (C2 - C4; C7 - C9), auf denen sich andere Gesenkgarnituren (5) befinden, an entsprechenden, zu den übrigen Pressen (P2 - P4; P6 - P8) der Reihe benachbarten ersten Positionen angeordnet werden und wobei die auf den Gesenkwagen (C1 - C10) befindlichen Gesenkgarnituren (5) in die jeweils benachbarten Pressen transportiert werden, während die Gesenkwagen sich an ihren ersten Positionen befinden, wodurch jede Presse eine der Gesenkgarnituren (5) aufnimmt, und wobei das Verfahren durch die folgenden Verfahrensschritte **gekennzeichnet** ist: Transportieren des Werkstücks (W) auf den einen Gesenkwagen (C1; C6), der sich an einem Ende der durch die Pressen (P1 - P4; P5 - P8) gebildeten Reihe (1; 2) befindet, und sukzessives Transportieren des Werkstücks (W) von dem einen Gesenkwagen weg zu jeder der Pressen (P1 - P4; P5 - P8) und zu jedem der übrigen Gesenkwagen, während jeder der Gesenkwagen an seiner ersten Position verbleibt.

13. Verfahren nach Anspruch 12, **dadurch gekennzeichnet, daß** das Werkstück (W) durch auf den Wagen angeordnete Werkstück-Umlademittel (27) von einem Ende der Reihe (1; 2) an deren entgegengesetztes Ende transportiert wird.

14. Verfahren nach Anspruch 13, **dadurch gekennzeichnet, daß** die Umlademittel (27) jedes Wagens (C1 - C10) vertikal an eine Position bewegt werden, an der sich die zum jeweiligen Wagen gehörende Gesenkgarnitur (5) vom Wagen weg und zu ihm hin transportieren läßt, ohne daß es zu einer Beeinträchtigung durch die Umlademittel kommt.

15. Verfahren nach Anspruch 12, **gekennzeichnet durch** die folgenden Verfahrensschritte: Positionieren der mehreren Formpressen (P1 - P4; P5 - P8) in der sich in Längsrichtung erstreckenden Reihe (1; 2); Vorsehen einer die Anzahl der Formpressen um eins übertreffenden Anzahl an Wagen (C1 - C10), die jeweils eine Werkstück-Gesenkgarnitur (5) tragen können; Bewegen all dieser Wagen an bestimmte Positionen relativ zu den Pressen, wobei an jedem Ende der Reihe einer der Wagen angeordnet wird und die übrigen Wagen die Zwischenräume zwischen benachbarten Pressen einnehmen; Transport der von den einzelnen Wagen getragenen Gesenkgarnitur (5) jeweils in eine benachbarte Presse; Positionieren eines Werkstücks (W) auf dem an einem Ende der Pressen-Reihe (1; 2) positionierten Wagen; Transport des Werkstücks (W) weg von dem einen Ende der Reihe befindlichen Wagen zu der an diesem Reihen-Ende befindlichen Presse; Formen des Werkstücks (W) in der an diesem Reihen-Ende befindlichen Presse; Umladen des geformten Werkstücks auf den im Zwischenraum zwischen der an diesem Reihen-Ende befindlichen Presse und der nächsten, benachbarten Presse befindlichen Wagen; Umladen des geformten Werkstücks vom zwischen der an diesem Reihen-Ende befindlichen Presse und der nächsten benachbarten Presse angeordneten Wagen zur nächsten, benachbarten Presse; weiteres Formen des geformten Werkstücks in der nächsten, benachbarten Presse; und Umladen des erneut umgeformten Werkstücks von der nächsten, benachbarten Presse zu dem von der nächsten, benachbarten Presse aus in Förderrichtung nächsten Wagen.

16. Verfahren nach Anspruch 15, **dadurch gekennzeichnet, daß** das erneut umgeformte Werkstück (W) vom in Förderrichtung nächsten Wagen entfernt wird.

17. Verfahren nach Anspruch 15, **dadurch gekennzeichnet, daß** die Gesenkgarnituren (5) nach Beendigung der Form- und Umformoperationen am Werkstück (W) von den Pressen (P1 - P8) weg wieder zu den zugehörigen Wagen zurücktransportiert werden.

## Revendications

1. Appareil destiné à supporter et à déplacer une matrice à former (5) à l'intérieur et à l'extérieur d'une presse à former (P1-P8) dans laquelle une pièce à traiter (W) peut être formée et pour transférer une pièce à traiter formée, ledit appareil comprenant :
un chariot (C1-C10) pouvant se déplacer d'une première position alignée et adjacente à un côté d'une presse à former vers une deuxième position non alignée avec ledit un côté de ladite presse ;
un moyen (15) placé sur ledit chariot pour recevoir une matrice à former (5) et permettant un déplacement avec et par rapport audit chariot (C1-C10) ;
un moyen (14) permettant à ladite matrice de se déplacer de manière sélective depuis ledit chariot (C1-C10) vers l'intérieur de ladite presse (P1-P8) lorsque ledit chariot est dans ladite première position ;
un moyen de support de pièce à traiter (36) permettant de supporter de manière amovible une pièce à traiter (W) ; et
un moyen de transfert de pièce à traiter (27) permettant de transférer de manière sélective une pièce à traiter (W) depuis et vers ledit moyen de support (36) ;
**caractérisé par** un moyen (24) permettant de monter ledit moyen de transfert (27) sur ledit chariot (C1-C10) afin que ledit moyen de transfert puisse transférer de manière sélective une pièce à traiter (W) depuis et vers ledit moyen de support (36) lorsque ledit chariot est dans ladite première position et que ladite matrice (5) se trouve dans ladite presse.

2. Appareil selon la revendication 1, **caractérisé en ce que** ledit moyen de transfert (27) comprend une superstructure (24) en saillie vers le haut à partir dudit chariot (C1-C10) et dans lequel ledit moyen de transfert est transporté par ladite superstructure.

3. Appareil selon la revendication 2, **caractérisé en ce qu'**il comprend un moyen (29) permettant de régler ledit moyen de transfert (27) dans le sens vertical par rapport à ladite superstructure (24) afin de fournir un espace suffisant entre ledit moyen de transfert et ledit chariot (C1-C10) pour que ladite matrice à former (5) puisse être déplacée vers et depuis ledit chariot sans interférence avec ledit moyen de transfert.

4. Appareil selon la revendication 1 à utiliser avec au moins une presse à former (P1-P8) dans laquelle se trouve un poste à former comportant un ensemble de matrice (5) composé de demi-moules séparables (4, 6) entre lesquels une pièce à traiter (W) peut être placée et formée, **caractérisé par** une paire de chariots mobiles (C1, C2, par exemple), l'un d'entre eux pouvant se déplacer vers une position dans laquelle ledit ensemble de matrice (5) peut être éloigné dudit chariot vers l'intérieur dudit poste à former et l'autre pouvant se déplacer vers une position lui permettant de recevoir ledit ensemble de matrice depuis ledit poste à former ; un premier moyen de transfert (27) transporté par ledit un desdits chariots (C1, par exemple) pour transférer une pièce à traiter (W) depuis ledit un desdits chariots vers l'intérieur dudit poste à former et entre les demi-moules (4, 6) dudit ensemble de matrice (5) ; et un deuxième moyen de transfert (27) transporté par ledit autre desdits chariots (C2, par exemple) pour transférer une pièce à traiter (W) depuis la position entre les demi-moules dudit ensemble de matrice vers ledit autre desdits chariots.

5. Appareil selon la revendication 4, **caractérisé en ce que** chacun desdits chariots (C1, C2) peut supporter ledit ensemble de matrice (5) et inclure un moyen (14) permettant de déplacer ledit ensemble de matrice depuis et vers lesdits chariots vers et depuis ledit poste à former.

6. Appareil selon la revendication 5 **caractérisé en ce que** chacun desdits premier et deuxième moyens de transfert (27) est réglable par rapport au chariot (C1, C2) associé afin que le chariot puisse supporter simultanément ledit ensemble de matrice (5) et ledit moyen de transfert associé.

7. Appareil selon la revendication 6, **caractérisé en ce qu'**il comprend un bâti (18, par exemple) adjacent à ladite presse (P1, par exemple) destiné à supporter ledit ensemble de matrice (5, 5a), au moins l'un des chariots (C1, C2, par exemple) pouvant se déplacer vers et depuis une position adjacente audit bâti pour qu'un ensemble de matrice puisse être déplacé vers et depuis ledit bâti depuis et vers ledit chariot.

8. Appareil selon au moins l'une des revendications 4 à 7, **caractérisé par** une paire de rangées espacées et sensiblement parallèles (1, 2) de presses à former des pièces à traiter (P1-P4, P5-P8), chaque presse de chaque rangée étant espacée de la pression voisine et adaptée pour recevoir un ensemble de matrice (5) possédant des demi-moules (4, 6) entre lesquels une pièce à traiter (W) peut être placée et retirée, une pluralité de bâtis (18, 19, 20, 21) correspondant au nombre et à l'espacement desdites presses, chacun desdits bâtis étant adapté pour accepter de manière amovible l'un desdits ensembles de matrice (5, 5a), un moyen (7, 8, 9, 10, 11) permettant de déplacer chacun desdits chariots (C1-C10) depuis une première position adjacente à l'un desdits bâtis vers une deuxième position adjacente à l'une desdites presses et dans laquelle un ensemble de matrice (5) supporté sur ce chariot peut être déplacé dans et hors de cette presse et un moyen permettant de déplacer un ensemble de matrice (5) supporté par ledit chariot depuis ce dernier vers l'intérieur de la presse adjacente lorsque ledit chariot se trouve dans ladite deuxième position ; et comprenant un moyen de transfert de pièce à traiter (27) transporté par chacun desdits chariots (C1-C10) afin de transférer les pièces à traiter (W) depuis lesdits chariots vers la presse adjacente et depuis cette presse vers la presse adjacente suivante.

9. Appareil selon la revendication 8, **caractérisé en ce que** le moyen de transfert (27) de chacun desdits chariots (C1-C10) peut se déplacer vers une position dans laquelle le déplacement d'un ensemble de matrice (5) vers ou depuis ce chariot n'interfère pas avec ledit moyen de transfert.

10. Appareil selon la revendication 8, **caractérisé en ce qu'**il comprend un moyen (10) transporté par chacun desdits chariots pour déplacer un ensemble de matrice (5) vers et depuis chaque chariot.

11. Appareil selon la revendication 8, **caractérisé en ce que** chacun desdits ensembles de matrice (5) comprend un demi-moule supérieur (6) et un demi-moule inférieur (4), chaque demi-moule possédant une surface de support de pièce à traiter occupant un niveau dans la presse qui lui est associée qui se trouve au-dessus de celui de la surface supérieure du chariot adjacent, et un moyen de support de pièce à traiter (36) transporté par chacun desdits chariots, dans lequel l'ensemble de matrice (5) associé se trouve à l'intérieur de ladite presse, chacun desdits moyens de support de pièce à traiter ayant une surface de support de pièce à traiter située à un niveau correspondant à celui du demi-moule inférieur (4) adjacent.

12. Procédé de formation de pièces à traiter, dans lequel chaque pièce à traiter (W) est présentée successivement aux presses à former (P1-P5 ; P6-P8) disposées sur une rangée s'étendant longitudinalement (1 ; 2) et qui sont espacées longitudinalement les unes des autres sur ladite rangée, dans lequel l'un de certains chariots (C1 ; C6) de matrice transportant chacun un ensemble de matrice (5) est positionné dans une première position dans laquelle l'ensemble de matrice ainsi transporté est adjacent à la presse (P1 ; P5) à une extrémité de ladite rangée (1 ; 2) et d'autres chariots (C2-C4 ; C7-C9) parmi lesdits chariots de matrice transportant les autres ensembles de matrice (5) sont positionnés dans une première position correspondante adjacente aux autres presses (P2-P4 ; P6-P8) de ladite rangée, et les ensembles de matrice (5) transportés par lesdits chariots de matrice (C1-C10) sont déplacés dans la presse adjacente alors que lesdits chariots de matrice sont dans lesdites premières positions, chacune desdites presses contenant ainsi l'un desdits ensembles de matrice (5), **caractérisé par** le déplacement d'une pièce à traiter (W) sur ledit un chariot (C1 ; C6) à ladite une extrémité de ladite rangée (1 ; 2) de presses (P1-P4, P5-P8), et par le déplacement de ladite pièce à traiter (W) successivement depuis ledit un chariot de matrice vers chacune des presses (P1-P4, P5-P8) et vers chacun des autres chariots de matrice alors que chacun desdits chariots de matrice demeure dans ladite première position.

13. Procédé selon la revendication 12, **caractérisé en ce que** le déplacement de ladite pièce à traiter (W) depuis une extrémité de ladite rangée (1 ; 2) vers l'extrémité opposée de cette rangée est réalisé en utilisant le moyen de transfert de pièce à traiter (27) transporté par lesdits chariots.

14. Procédé selon la revendication 13, **caractérisé par** le déplacement dudit moyen de transfert (27) de chacun desdits chariots (C1-C10) dans le sens vertical vers une position dans laquelle l'ensemble de matrice (5) associé à ce chariot peut se déplacer depuis et vers ce chariot sans interférence avec le moyen de transfert.

15. Procédé selon la revendication 12, **caractérisé par** le positionnement de la pluralité de presses à former (P1-P4, P5-P8) dans ladite rangée s'étendant longitudinalement (1 ; 2) et la fourniture d'une pluralité desdits chariots (C1-C10) plus un sur chacun desquels un ensemble de matrice (5) permettant de former des pièces à traiter peut être supporté ; le déplacement de l'ensemble desdits chariots dans des positions par rapport auxdites presses et dans lesquelles l'un desdits chariots se trouve à chaque extrémité de ladite rangée et les autres chariots occupent les espaces entre les presses adjacentes ; le déplacement dans une presse adjacente de l'ensemble de matrice (5) transporté par chaque chariot sur lequel un ensemble de matrice (5) est transporté ; le positionnement d'une pièce à traiter (W) sur le chariot à une extrémité de ladite rangée (1 ; 2) de presses ; le transfert de cette pièce à traiter (W) depuis le chariot à ladite une extrémité de ladite rangée vers la presse à ladite une extrémité de ladite rangée ; la formation de la pièce à traiter (W) dans ladite presse à ladite une extrémité de ladite rangée ; le transfert de la pièce formée vers le chariot dans l'espace entre la presse à ladite une extrémité de ladite rangée et la presse adjacente suivante ; le transfert de la pièce formée depuis le chariot entre la presse à ladite une extrémité de ladite rangée et la presse adjacente suivante ; la formation additionnelle de la pièce formée dans ladite presse adjacente suivante ; et le transfert de la pièce à nouveau formée depuis la presse adjacente suivante vers le chariot en amont de la presse adjacente suivante.

16. Procédé selon la revendication 15, **caractérisé par** l'enlèvement de la pièce à nouveau formée (W) dudit chariot en amont.

17. Procédé selon la revendication 15, **caractérisé par** le retour des ensembles de matrice (5) depuis les presses (P1-P8) vers les chariots respectifs à la fin des opérations de formation et de formation additionnelle des pièces à traiter (W).
